# EUROPEAN PATENT APPLICATION

(11) **EP 1 889 883 A1**
(43) Date of publication of application: **20.02.2008**
(21) Application number: 06746571.6
(22) Date of filing: 11.05.2006
(51) Int. Cl.: C09C 1/48, C09C 3/06, C09C 3/08, C09D 17/00, C09D 11/00

(54) **PROCESS FOR PRODUCING AQUEOUS DISPERSION OF CARBON BLACK**

(30) Priority: 24.05.2005 JP 2005150704
(71) Applicant: Tokai Carbon Company, Ltd., Minato-ku, Tokyo 107-8636 (JP)
(72) Inventor: NAKATA, Hidenao, Tokai Carbon Co., Ltd., Tokyo 1078636 (JP); ARAI, Hironori, Tokai Carbon Co., Ltd., Tokyo 1078636 (JP)
(74) Representative: Müller-Wolff, Thomas
(86) International application number: PCT/JP2006/309872
(87) International publication number: WO 2006/126437

(57) **Abstract**

The present invention provides a method of producing a carbon black aqueous dispersion which has excellent water-dispersibility and ink performance, and is suitable as an aqueous black ink for an inkjet printer or the like. A first method of producing a carbon black aqueous dispersion includes treating carbon black with a chemical surface modifier in an aqueous medium, neutralizing acidic groups produced on the surface of the carbon black due to the chemical modification, atomizing the carbon black, and purifying the resulting mixture. A second method of producing a carbon black aqueous dispersion includes treating carbon black with a chemical surface modifier in an aqueous medium, neutralizing acidic groups produced on the surface of the carbon black due to the chemical modification, purifying the resulting mixture, and atomizing the carbon black.

## Description

### TECHNICAL FIELD

The present invention relates to a method of producing a carbon black aqueous dispersion suitable as an aqueous black ink for an inkjet printer or the like.

### BACKGROUND ART

It is extremely difficult to stably disperse carbon black in water at high concentration due to hydrophobicity and low wettability with water. This is because the surface of carbon black has an extremely small number (amount) of functional groups having high affinity with water molecules (e.g. hydrophilic hydrogen-containing functional groups such as a carboxyl group and a hydroxyl group). A known traditional measure is to improve the dispersibility of carbon black in water by oxidizing the carbon black to form hydrophilic functional groups on the surface of the carbon black.

For example, JP-A-48-018186 discloses a method of oxidizing carbon black using a hypohalite aqueous solution, and JP-A-57-159856 discloses a method of oxidizing carbon black using low-temperature oxygen plasma. However, it is difficult to uniformly oxidize a large amount of carbon black using low-temperature plasma.

A method of producing an aqueous ink is also known in which dispersibility of moderately oxidized carbon black in water is improved by using a coupling agent or a surfactant (e.g. JP-A-08-319444). However, it is difficult to stably maintain dispersibility for a long period of time since the surfactant or the like is oxidized or decomposed due to a change in temperature and a change with time. JP-A-04-189877 discloses a method of finely grinding carbon black in water using glass beads and oxidizing carbon black using a hypohalite as a method of treating the surface of carbon black while improving the dispersibility. However, the effect of grinding in water using glass beads is diminished due to buoyancy.

JP-A-08-003498 discloses a water-based pigment ink containing water and carbon black having a surface active hydrogen content of 1.5 mmol/g or more, and a method of producing a water-based pigment ink including water and carbon black including (a) providing acidic carbon black and (b) further oxidizing the acidic carbon black in water using a hypohalite. JP-A-08-319444 discloses a method of producing a water-based pigment ink including finely dispersing carbon black with an oil absorption of 100 ml/100 g or less in an aqueous medium and oxidizing the carbon black using a hypohalite.

According to the methods disclosed in JP-A-08-003498 and JP-A-08-319444, a water-based pigment ink with excellent water-dispersibililty and long-term dispersion stability is obtained by oxidizing carbon black so that a large amount of active hydrogen (i.e. hydrophilic functional groups) is formed on the surface of the carbon black. However, the number of hydrophilic functional groups existing at the contact interface between the surfaces of carbon black particles and water molecules is important for dispersing carbon black in water and maintaining a stable dispersed state. Therefore, it is difficult to accurately determine the dispersibility merely by the number of functional groups per unit weight of carbon black.

The applicant of this application has focused on the number of hydrophilic hydrogen-containing functional groups per unit surface area of carbon black as an index for accurately determining dispersibility, and has developed easily water-dispersible carbon black which is modified by oxidation and in which the total number of carboxyl groups and hydroxyl groups among the hydrogen-containing functional groups per unit surface area is 3 µeq/m² or more (JP-A-11-148027).

A method of forming hydrophilic functional groups on the surface of the carbon black has a limited effect for improving the dispersibility of carbon black in water and maintaining the dispersion stability for a long period of time. The applicant has conducted further research and has found that high dispersiblity and dispersion stability in water are closely related to the aggregation state of carbon black particles. The applicant has developed and proposed highly water-dispersible carbon black obtained by oxidizing carbon black having a nitrogen adsorption specific surface area (N₂SA) of 80 m²/g or more and a DBP absorption of 70 ml/100 g or less, wherein the Dupa/Dst ratio of the Stokes mode diameter Dst (nm) of the aggregate and the average particle diameter Dupa (nm) of the agglomerate is 1.5 to 2.0 (JP-A-11-148026).

JP-A-2003-535949 discloses a method of producing a self-dispersing pigment including oxidizing a pigment with ozone in an aqueous environment while subjecting the pigment to at least one dispersive mixing operation at a shear rate of at least 200 sec⁻¹. This method of simultaneously grinding and oxidizing the pigment has a problem in that oxidation becomes insufficient due to the low solubility of ozone gas in water.

JP-A-2003-226824 discloses a method of oxidizing an organic pigment including dispersing an organic pigment such as carbon black in an aqueous medium and exposing the pigment dispersion to ultrasonic radiation, whereby the exposed pigment is provided with 3 to 10 microequivalents of carboxylic acids or salts thereof per square meter of the pigment surface, However, ultrasonic radiation does not provide enough energy to atomize carbon black agglomerates.

### DISCLOSURE OF THE INVENTION

The inventors of the present invention have conducted intensive research in order to improve the dispersibility in water and the ink performance of carbon black. As a result, the inventors have found that an aqueous dispersion in which carbon black particles are finely dispersed can be obtained by treating carbon black with a chemical surface modifier in water to introduce acidic groups such as carboxyl groups and hydroxyl groups, and atomizing carbon black agglomerates.

However, this may cause corrosion of an atomizer, which may then lead to contamination. As a result of further studies, the inventors have found that neutralizing the carbon black treated with the chemical surface modifier before atomization effectively prevents corrosion and allows the carbon black to be finely dispersed in a more effective manner.

The present invention has been completed in view of the above finding, and has an object of providing a method of producing a carbon black aqueous dispersion which is suitable as an aqueous black ink for an inkjet printer or the like, and exhibits excellent fixation density, print quality, discharge stability, light resistance, and storage stability when printed on plain paper, specialty paper, an OHP sheet, art paper, and the like.

In order to achieve the above object, a first method of producing a carbon black aqueous dispersion according to the present invention comprises treating carbon black with a chemical surface modifier in an aqueous medium, neutralizing acidic groups produced on the surface of the carbon black due to the chemical modification, atomizing the carbon black, and purifying the resulting mixture.

In order to achieve the above object, a second method of producing a carbon black aqueous dispersion comprises treating carbon black with a chemical surface modifier in an aqueous medium, neutralizing acidic groups produced on the surface of the carbon black due to the chemical modification, purifying the resulting mixture, and atomizing the carbon black.

In order to achieve the above object, a third method of producing a carbon black aqueous dispersion comprises treating carbon black with a chemical surface modifier in an aqueous medium, atomizing the carbon black, neutralizing acidic groups produced on the surface of the carbon black due to the chemical modification, and purifying the resulting mixture.

### BRIEF DESCRIPTION OF THE DRAWING

FIG. 1 is a flowchart showing a first process of producing a carbon black aqueous dispersion according to the present invention.
FIG. 2 is a flowchart showing a second process of producing a carbon black aqueous dispersion according to the present invention.
FIG. 3 is a flowchart showing a third process of producing a carbon black aqueous dispersion according to the present invention.

### BEST MODE FOR CARRYING OUT THE INVENTION

The carbon black applied in the present invention is not specifically limited. The carbon black may be furnace black, channel black, acetylene black, thermal black, or the like. A mixture of two or more types of carbon black or a mixture of carbon black differing in grade or brand may also be used.

The aqueous medium mainly contains water. It is preferable to use water (more preferably deionized water) in terms of low cost and safety.

The chemical surface modifier chemically modifies the carbon black to form hydrophilic acidic groups such as carboxyl groups and hydroxyl groups on the surfaces of the carbon black particles. Examples of the chemical surface modifier include oxidizing agents such as peroxo diacids (e.g. peroxosulfuric acid, peroxocarbonic acid, and peroxophosphoric acid) and salts thereof. As examples of the salts, salts of metals such as lithium, sodium, potassium, and aluminum, and ammonium salts can be given. The hydrophilic acidic groups may be formed by diazo coupling reaction. Note that ozone gas cannot produce hydrophilic acidic groups efficiently due to low solubility in water.

According to the first method of producing a carbon black aqueous dispersion of the present invention, the carbon black and the chemical surface modifier are mixed in an aqueous medium in a given quantitative ratio. The mixture is stirred and mixed sufficiently in a mixing/stirring tank at an appropriate temperature (e.g. room temperature to 90°C) to form a slurry, thereby chemically modifying the surface of the carbon black. Hydrophilic acidic groups such as carboxyl groups and hydroxyl groups are produced on the surface of the carbon black agglomerate by the chemical modification.

The carbon black can be dispersed efficiently by subjecting the carbon black to wet or dry oxidation before the treatment with the chemical surface modifier, whereby the carbon black can be chemically modified uniformly and effectively. Note that the term "wet oxidation" refers to oxidation using ozone water, a hydrogen peroxide aqueous solution, a peroxo diacid, or a peroxo diacid salt. Dry oxidation is performed by exposing the carbon black to a gas atmosphere such as ozone, oxygen, NOₓ, or SOₓ.

It is preferable to add a surfactant so that the carbon black is dispersed uniformly in the slurry. An anionic, nonionic, or cationic surfactant may be used.

Examples of the anionic surfactant include fatty acid salts, alkyl sulfate salts, and alkylaryl sulfonates. Examples of the nonionic surfactant include polyoxyethylene alkyl ethers and polyoxyethylene alkyl aryl ethers. Examples of the cationic surfactant include alkylamine salts and quaternary ammonium salts.

Acidic groups such as carboxyl groups and hydroxyl groups produced on the surface of the carbon black agglomerate by chemical modification are then neutralized. As a neutralizing agent, alkali salts such as potassium hydroxide and sodium hydroxide, ammonia, and organic amines such as ethanolamine, triethanolamine, dimethylaminoethanol, and quaternary amine may be used. It is preferable to add the neutralizing agent to the slurry in a stirring tank, and to stir the slurry at 95 to 105°C for 2 to 5 hours to neutralize the acidic groups completely.

Removal of reduced salts produced by chemical modification, which hinder neutralization, allows the neutralization reaction to proceed efficiently to improve the water-dispersibility of the carbon black, and prevents the carbon black from reaggregating. A separation membrane such as an ultrafiltration (UF) membrane, a reverse osmosis (RO) membrane, and an electrodialysis membrane is preferably used as a reduced salt removal means.

After neutralization, the slurry is subjected to an atomization process in which secondary aggregates (agglomerates) of the carbon black particles are atomized. The atomization process is performed by spraying the slurry from a nozzle under pressure at a high speed to cause collision between sprayed streams or between sprayed streams and a wall surface. The carbon black agglomerates in the slurry are atomized by the collision, the shear force at the time of spraying, and the like.

Various commercially-available atomizers may be used as a means to atomize the carbon black agglomerates. Examples of such atomizers include Microfluidizer (manufactured by Microfluidics Corporation), Ultimizer (manufactured by Sugino Machine Limited), Nanomizer (manufactured by Tokai Corporation), a high-pressure homogenizer, and the like.

The slurry is sprayed from a spray nozzle under a pressure of 50 to 250 MPa, for example. The carbon black agglomerates in the slurry are atomized by the shear force of the spray streams at the time of spraying, a mutual collision, or a collision with a wall surface. The carbon black agglomerates are preferably atomized to a maximum particle diameter is 1 µm or less.

The maximum particle diameter of the carbon black agglomerates is measured by the following method.

The concentration of carbon black in the slurry is adjusted to 0.1 to 0.5 kg/cm³. A heterodyne laser Doppler particle size distribution measurement device (UPA model 9340 manufactured by Microtrac Inc.) is suitably used for measurement. When particles in Brownian motion in a suspension are irradiated with a laser beam, the frequency of scattered light is modulated by the Doppler effect. The magnitude of the Brownian motion (i.e. particle diameter) is measured from the degree of frequency modulation. A cumulative frequency distribution curve is created from the particle diameters of the carbon black agglomerates thus measured. The value at a cumulative frequency of 99% of the cumulative frequency distribution curve is taken as the maximum particle diameter (Dupa 99%, nm) of the carbon black agglomerates.

After atomization, the slurry is purified in order to remove salts produced by neutralization, undispersed agglomerates and coarse particles of the carbon black in the slurry, and the like. In the purification process, salts are separated and removed using a separation membrane such as an ultrafiltration (UF) membrane, a reverse osmosis (RO) membrane, and an electrodialysis membrane or undispersed agglomerates and coarse particles are removed by centrifugation, filtration, or the like.

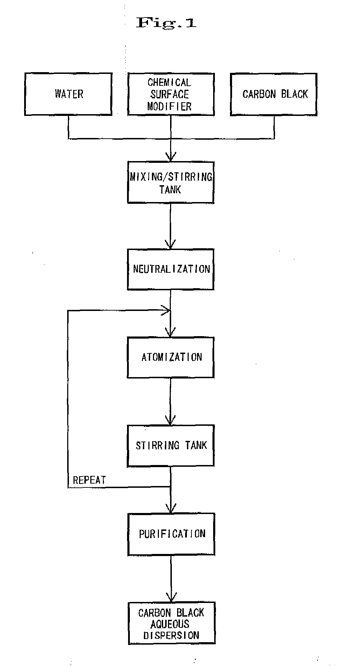

A flowchart of the production process is shown in FIG. 1. In FIG. 1, water such as deionized water, a chemical surface modifier such as a peroxo diacid, and carbon black are placed in a mixing/stirring tank in a given quantitative ratio. The mixture is stirred and mixed sufficiently in the mixing/stirring tank at room temperature to 90°C to form a slurry, thereby chemically modifying the carbon black. Then, an alkali is added to the slurry to effect neutralization.

The slurry after neutralization is transferred to an atomizer. A high-speed spray stream of the slurry is sprayed from a spray nozzle of the atomizer, whereby the carbon black agglomerates in the slurry are atomized. The slurry after atomization is transferred to a stirring tank where the slurry is purified with stirring to maintain a dispersed state. The slurry is repeatedly transferred back to the atomizer for further atomization until the carbon black agglomerates are sufficiently atomized to have a desired particle diameter (e.g. a maximum particle diameter of 1 µm or less).

A carbon black aqueous dispersion is thus produced. The carbon black concentration of the aqueous dispersion is adjusted to a concentration appropriate for a black ink or the like by adding or removing water.

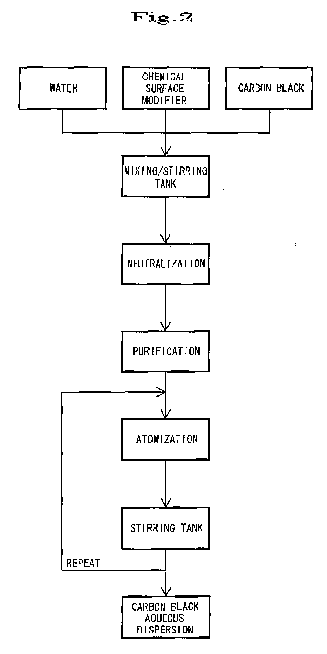

The second method of producing a carbon black aqueous dispersion according to the present invention includes the steps of the first method of producing a carbon black aqueous dispersion in a different order. That is, the slurry subjected to chemical modification is subjected to neutralization, then purification, and then atomization. A flowchart of this production process is shown in FIG. 2.

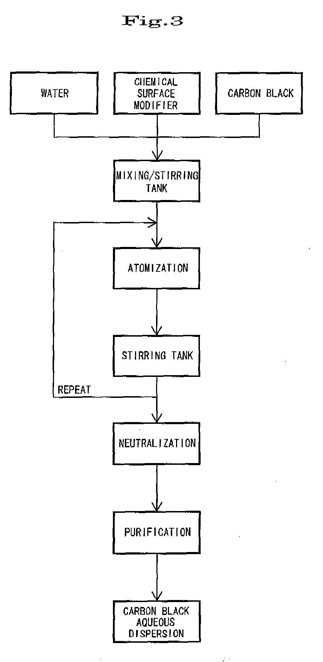

The third method of producing a carbon black aqueous dispersion according to the present invention includes the steps of the first method of producing a carbon black aqueous dispersion in a different order. That is, the slurry subjected to chemical modification is subjected to neutralization, then neutralization, and then purification. A flowchart of this production process is shown in FIG. 3.

According to the production method of the present invention, the carbon black agglomerates in the slurry can be chemically modified and atomized efficiently. Therefore, the concentration of carbon black in the slurry can be increased. For example, the concentration of carbon black in the slurry may be set at 3 to 25 wt%.

### EXAMPLES

The present invention will be described below by way of examples and a comparative example.

### Example 1

A mixing/stirring tank was charged with Seast 9 (manufactured by Tokai Carbon Co., Ltd.) as carbon black, sodium peroxodisulfate as a chemical surface modifier, and deionized water in the amounts stated below. The mixture was stirred and mixed at 60°C for 10 hours at a stirring speed of 300 rpm to obtain a slurry and chemically modify the carbon black.
Carbon black: 150 g
Sodium peroxodisulfate deionized water solution (concentration: 2.0 N): 3000 ml

After the reaction, the carbon black was filtered, neutralized with sodium hydroxide, and continuously stirred in the mixing/stirring tank to stabilize the neutralization reaction. Salts were removed from the slurry and the slurry was concentrated using an ultrafiltration membrane (AHV-1010 manufactured by Asahi Kasei Corporation). The slurry was thus purified to have a carbon black concentration of 20 wt% and an electrical conductivity of 1.02 mS/cm.

The slurry was supplied to an Ultimizer (manufactured by Sugino Machine Limited) and was sprayed under a pressure of 245 MPa to cause collision of sprayed streams. The slurry after spraying and collision was cooled with stirring in a stirring tank. The slurry was repeatedly supplied back to the Ultimizer 10 times for further atomization. Thus, a carbon black aqueous dispersion was produced.

### Example 2

In the same manner as in Example 1, a slurry obtained by chemically modifying and neutralizing carbon black (Seast 9) was repeatedly supplied to the Ultimizer 10 times to be sprayed and atomized under a pressure of 245 MPa. Salts were then removed from the slurry and the slurry was concentrated using an ultrafiltration membrane (AHV-1010 manufactured by Asahi Kasei Corporation). The slurry was thus purified to have a carbon black concentration of 20 wt% and an electrical conductivity of 1.21 mS/cm. Thus, a carbon black dispersion was produced.

### Comparative Example 1

An aqueous dispersion of which the carbon black concentration was 20 wt% was produced in the same manner as in Example 1, except that atomization using the Ultimizer was replaced with stirring in the stirring tank at a rotational speed of 300 rpm for 10 hours.

In order to evaluate the water-dispersibility and the ink performance of the carbon black aqueous dispersion thus produced, viscosity, particle diameter of carbon black agglomerates, filterability, print density, and the like were measured by the following methods. The results are shown in Table 1.
Viscosity: A sample was held at 70°C in an airtight container. The viscosity of the sample was measured after 1 to 4 weeks using a rotational vibration type viscometer (VM-100-L manufactured by Yamaichi Electronics Co., Ltd.).
Particle diameter of carbon black agglomerate: The particle diameters of the carbon black agglomerates were measured for each sample of which the viscosity was measured using a heterodyne laser Doppler particle size distribution measurement device (UPA model 9340 manufactured by Microtrac Inc.), and a cumulative frequency distribution curve was created. The value corresponding to a cumulative percentage of 99% was determined as the maximum particle diameter (Dupa 99%) of the carbon black agglomerates, and the value corresponding to a cumulative percentage of 50% was determined as the average particle diameter (Dupa 50%) of the carbon black agglomerates.
Filterability: A filtration test was conducted in which 200 g of the sample was filtered through a No. 2 filter paper (diameter: 90) or a filter having a pore size of 3 µm, 0.8 µm, 0.65 µm, or 0.45 µm under reduced pressure of 2666.4 Pa. The amount of the sample filtered was measured.
Print density: Ink was prepared according to the formulation shown in Table 2. The ink was filtered through a membrane filter having a pore size of 0.8 µm, introduced into a cartridge for an inkjet printer (EM-930C manufactured by Sciko Epson Corporation), and tested for printing. Plain paper (Xerox 4024) and matte glossy paper (RM-1GP01 manufactured by Ricoh Company, Ltd.) were used. The print density (reflective optical density) on plain paper was measured using a Macbeth densitometer (RD-927 manufactured by Kollmorgen Instruments Corporation). The glossiness on matte glossy paper was measured using a glossmeter (reflection angle: 60°) manufactured by BYK Gardner.

**TABLE 1**

| | Example 1 | Example 2 | Comparative Example 1 |
|---|---|---|---|
| Viscosity (ep) | | | |
| Initial | 4,36 | 4.87 | 6.41 |
| 70°C after 1 week | 4.12 | 4.71 | 5.45 |
| 70°C after 2 weeks | 3.98 | 4.69 | 5.23 |
| 70°C after 3 weeks | 4.01 | 4.67 | 5,21 |
| 70°C after 4 weeks | 4.11 | 4,72 | 5.36 |

| Average particle diameter of agglemerates (nm) | | | |
|---|---|---|---|
| Initial | 115,2 | 118.6 | 145.6 |
| 70°C after 1 week | 114.6 | 117.9 | 138.6 |
| 70°C after 2 weeks | 114.2 | 116.7 | 141.2 |
| 70°C after 3 weeks | 115.8 | 116.8 | 138.4 |
| 70°C after 4 weeks | 114.8 | 117.5 | 143.0 |

| Maximum particle diameter of agglemerates (nm) | | | |
|---|---|---|---|
| Initial | 272.3 | 279.2 | 323.6 |
| 70°C after 1 week | 271.5 | 280.1 | 313.4 |
| 70°C after 2 weeks | 269.8 | 279.5 | 312.3 |
| 70°C after 3 weeks | 270.4 | 278.6 | 326.3 |
| 70°C after 4 weeks | 271.5 | 277.7 | 315.6 |

| Filterability (%) | | | |
|---|---|---|---|
| No. 2 filter paper | 100 | 100 | 50 |
| Pore size: 3 µm | 100 | 100 | 0 |
| Pore size: 0.8 µm | 0 | 0 | 0 |
| Pore size: 0.65 µm | 0 | 0 | 0 |
| Pore size: 0.45 µm | 0 | 0 | 0 |
| Print density (OD value) | 1,37 | 1.38 | 1.38 |
| Glossiness | 11.0 | 10.6 | 6.2 |

**TABLE 2**

| | |
|---|---|
| CB aqueous dispersion (15 wt%) | 33 wt% |
| Glycerol | 5 wt% |
| Diethylene glycol | 15 wt% |
| 1 methyl 2 pyrrolidone (or N methylpyrrolidone) | 2 wt% |
| Buffer *1) | 0.5 wt% |
| Surfactant *2) | 0.1 wt% |
| Distilled water | 44.4 wt% |
| Total | 100 wt% |

| | |
|---|---|
| *1) 3-[(1,1-Dimethyl-2-hydroxyethyl)amino]-2-hydrixypropanesulfonic acid *2) C₁₂H₂₅O-(C₂H₄O)₃SO₃Na | |

The differences between the examples and the comparative example based on the results shown in Table 1 are as follows. That is, the viscosities of the aqueous dispersions of Examples 1 and 2 were about 30% lower than the viscosity of the aqueous dispersion in Comparative Example 1. further, the average particle diameter of the carbon black agglomerates in the aqueous dispersions was 20 to 30 nm smaller, and the maximum particle diameter of the carbon black agglomerates in the aqueous dispersions was 40 to 50 nm smaller in Examples 1 and 2 compared to Comparative Example 1. The aqueous dispersion in Comparative Example I could not completely pass through the No. 2 filter paper. This indicates that the aqueous dispersions of Examples I and 2 had higher filterability. The aqueous dispersions of Examples 1 and 2 and Comparative Example 1 showed similar degrees of blackness (i.e. print densities) on plain paper as the ink performance. However, the aqueous dispersions of Examples 1 and 2 showed much higher glossiness on matte glossy paper.

### INDUSTRIAL APPLICABILITY

According to the present invention, a carbon black aqueous dispersion suitable as an aqueous black ink for an inkjet printer or the like can be produced. The carbon black aqueous dispersion is highly water-dispersible, has excellent dispersibility which allows a dispersed state to be stably maintained for a long period of time, has a high degree of blackness and excellent filterability, exhibits fixation density, discharge stability, and storage stability in a well-balanced manner, and has excellent water-dispersibility and ink performance.

## Claims

1. A method of producing a carbon black aqueous dispersion comprising treating carbon black with a chemical surface modifier in an aqueous medium, neutralizing acidic groups produced on the surface of the carbon black duc to the chemical modification, atomizing the carbon black, and purifying the resulting mixture.

2. A method of producing a carbon black aqueous dispersion comprising: treating carbon black with a chemical surface modifier in an aqueous medium, neutralizing acidic groups produced on the surface of the carbon black due to the chemical modification, purifying the resulting mixture, and atomizing the carbon black.

3. A method of producing a carbon black aqueous dispersion comprising: treating carbon black with a chemical surface modifier in an aqueous medium, atomizing the carbon black, neutralizing acidic groups produced on the surface of the carbon black due to the chemical modification, and purifying the resulting mixture.
